# EUROPEAN PATENT SPECIFICATION

(11) **EP 2 139 216 B1**
(45) Date of publication and mention of the grant of the patent: **16.07.2014**
(21) Application number: 08104577.5
(22) Date of filing: 27.06.2008
(51) Int. Cl.: H04M 11/06, H04M 3/30

(54) **Method and network element for processing data and communication system comprising such network element**
Verfahren und Netzwerkelement zur Verarbeitung von Daten und Kommunikationssystem mit einem derartigen Netzwerkelement
Procédé et élément de réseau de traitement de données et système de communication comprenant un tel élément de réseau

(43) Date of publication of application: 30.12.2009
(73) Proprietor: Nokia Solutions and Networks Oy, 02610 Espoo (FI)
(72) Inventor: Block, Carsten, 85567, Grafing (DE); Filipiak, Frank, 81476, München (DE); Haustein, Thomas, 81735, München (DE); Kirchner, Georg, 85244, Röhrmoos (DE); Mück, Josef, 81675, München (DE); Treyer, Thomas, 81379, München (DE); Zirwas, Wolfgang, 81249, München (DE)
(74) Representative: Borgström, Markus

(56) References cited:
- WO-A-01/58124
- DE-A1-102004 021 698
- DE-A1-102004 031 851
- US-A1- 2008 069 006
- "INSTALLATION, KONFIGURATION UND BEDIENUNG VON FRITZ!FON 7150" INTERNET CITATION, [Online] XP002419065 Retrieved from the Internet: URL:http://www.das-dsl-portal.de/fileadmin /downloads/handbuch_avm_fritzfo n_7150.pdf> [retrieved on 2007-02-06]
- INTERNET FORUM: "Fritz-Box geht immer online" INTERNET ARTICLE, [Online] 18 September 2005 (2005-09-18), pages 1-4, XP002507237 Internet Retrieved from the Internet: URL:http://www.supportnet.de/fresh/2005/8/ id1125432.asp> [retrieved on 2008-12-05]

## Description

The invention relates to a method, a network element and to a communication system comprising such a network element.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52 Mbit/s in downstream - 12 Mbit/s in upstream with asymmetric access.

Currently, standard VDSL uses up to 4 different frequency bands, two for upstream (from the client to the telecom provider) and two for downstream. Suitable modulation techniques are QAM (quadrature amplitude modulation) or DMT (discrete multitone modulation).

According to its high bandwidth, VDSL is capable of supporting applications like HDTV, as well as telephone services (e.g., Voice over IP) and general Internet access, over a single connection. In document US2008006900A1 a method is disclosed for managing several services provided via one single communication link.

VDSL2 (Very High Speed Digital Subscriber Line 2) is an access technology that exploits the existing infrastructure of copper wires that were originally used for plain old telephone service (POTS). It can be deployed from central offices (COs), from fiber-fed cabinets preferably located near the customer premises, or within buildings.

ITU-T G.993.2 (VDSL2) is an enhancement to G.993.1 (VDSL) that permits the transmission of asymmetric and symmetric (full duplex) aggregate data rates up to 200 Mbit/s on twisted pairs using a bandwidth up to 30 MHz.

In current xDSL technology an end-user (i.e. a customer premises equipment, CPE) is provided with a single connection to a linecard of the CO. Once the connection is established, a carrier signal is used to keep the CPE and the CO-linecard in a synchronous mode.

Disadvantageously, such approach consumes power even if there are no user data exchanged between the CO and the CPE. Transmission power is required as long as the connection exists. This concept may lead to a significant waste of energy in particular as most customers do not switch off their DSL modems every time they go offline.

In document DE2004021698A1 a method is disclosed for setting up multiple connections from a plurality of end points to an access point of a communications network. The connections are set up, kept or closed such that an overall number of parallel connections can be reduced.

Another disadvantage with regard to prior art DSL systems stems from the fact that in case the customer switches off the DSL modem, a training phase has to be processed after the modem is switched on again and this leads to a considerable delay until a connection will be up and running again.

The problem to be solved is to overcome the disadvantages set forth above and in particular to allow an efficient approach for operating a DSL modem and/or a DSL connection by reducing an overall power consumption thereof.

This problem is solved according to the features of the independent claims. Further embodiments result from the depending claims.

The problem above is solved by the method of claim 1.

Hence, energy can be reduced by the network element activating and/or deactivating the at least one line to the network subsequent to user requests for bandwidth and/or traffic.

In an embodiment, said user is associated with a customer premises equipment.

In a further embodiment, the at least one connection to the at least one user comprises one of the following:
- an xDSL line;
- an Ethernet connection;
- a wireless connection;
- a fiber line.

In a next embodiment, at least one line to the network is activated if the at least one user requires and/or requests an increased bandwidth.

It is also an embodiment that at least one line to the network is deactivated if the at least one user does not require the bandwidth provided for a predetermined amount of time.

Such predetermined amount of time may be associated with a timer, e.g., if a timer expires such predetermined amount of time is over. This allows for some hysteresis until lines to the network are deactivated.

Pursuant to another embodiment, the at least line to the network is connected to a linecard of a central office and/or to a linecard of a DSLAM.

According to an embodiment, the at least line to the network is operated in a MIMO mode.

According to another embodiment, a message is conveyed to the network to activate and/or deactivate at last on line to the network.

In yet another embodiment, said message is a OAM signaling message.

The problem stated above is also solved by network element of claim 10.

The problem stated supra is further solved by the communication system comprising the network element as described herein.

Embodiments of the invention are shown and illustrated in the following figure:

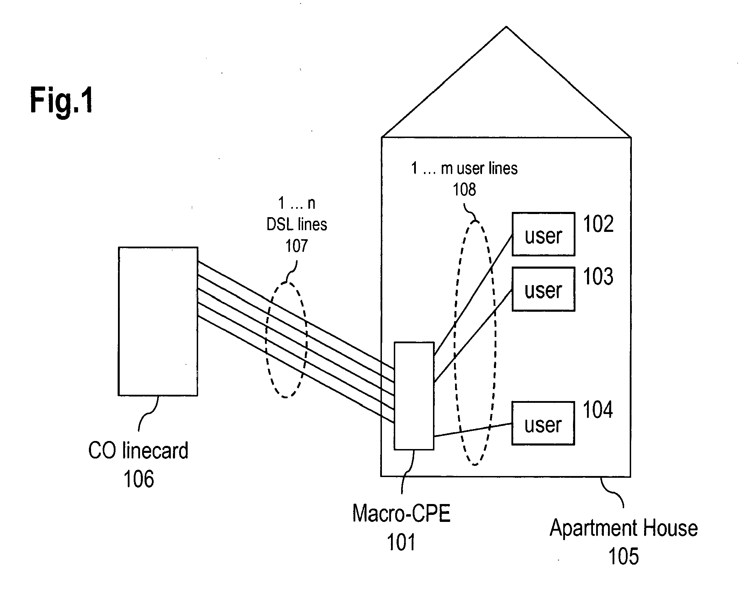

- Fig.1: shows a scenario comprising a Macro-CPE that is located adjacent and connected to several users via user lines as well as connected to a CO linecard via several DSL lines, wherein the Macro-CPE is enabled to control the DSL lines subsequent to user requests for bandwidth and/or traffic.

This approach introduces a new unit (also referred to as "Macro-CPE" or "Macro-DSLAM") that can be deployed adjacent to at least one CPE, preferably at the premises of the customer(s).

For such purpose, said Macro-CPE comprises an interface comprising at least one connection to a CO, in particular to a linecard of a CO. Each connection may be a digital subscriber line. Further, the Macro-CPE comprises at least one connection towards at least one user, in particular towards at least one CPE.

The connections towards the CO are preferably administered by the Macro-CPE according to requirements and/or demands of the users and/or CPEs.

Thus, the Macro-CPE may provide connections and/or bandwidth as requested by the users in a transparent manner to the users, i.e. the Macro-CPE may automatically enable and/or disable said connections towards the CPO to meet the users' requests for bandwidth.

For example, as shown in **Fig.1** a Macro-CPE 101 may be located inside an apartment house 105 and connected to several users 102 to 104 (i.e. devices located in the apartments of the users) .

The connections between the Macro-CPE 101 and the users 102 to 104 may utilize various technologies, in particular combinations thereof:
- xDSL-connection: Such approach would be transparent for existing end-user solutions;
- Ethernet-Connection: This approach may be advantageously used for new buildings;
- Wireless connection, e.g., WLAN: The wireless approach may fit special environments, e.g., facing difficulties running cables.
- Optical Fiber: Such approach may be advantageously used in case of high speed requirements and/or a huge number of (high-speed) users are to be supplied.

All connections to and from the users 102 to 104 are preferably collected and analyzed at the Macro-CPE 101.

The Macro-CPE 101 is further connected to the CO, in particular to the linecard(s) 106 of the CO via several xDSL lines 107.

The xDSL lines 107 are controlled and/or administered by the Macro-CPE 101 dependent on the bandwidth (or traffic) required by the users 102 to 104. Preferably, at least one xDSL line towards the CO-linecard 106 is maintained by the Macro-CPE 101. The more bandwidth required by the users 102 to 104 the more xDSL lines 107 are activated. Accordingly, in case of minor traffic, some xDSL lines 107 may be deactivated by the Macro-CPE 101.

Preferably, the active xDSL lines are operated in a MIMO mode to provide higher data rates compared to the same number of xDSL lines not being operated in MIMO mode. The n MIMO xDSL lines 107 can be assigned to m user lines 108 by the Macro-CPE 101.

Hence, a user's data rate can be supplied dynamically corresponding to the amount of lines and their respective bandwidth provided by the CO-linecard 106.

It is an alternative for MIMO processing to bond a number of n xDSL lines.

### Examples

a. In case there is no active user, one DSL line may be maintained to allow any user to get online and request traffic without (significant) delay.
b. In case there is one user active, one DSL line is kept alive to handle this user's traffic and to allow other user's to get online thereby requesting bandwidth.
c. In case of two or more active users, n DSL lines will be activated, wherein n depends on the actual amount of bandwidth required (or requested) by the users.
   - If the total load increases, a new DSL line will be switched active.
   - If the total load decreases, an active DSL line will be switched to inactive.

### Saving power

The Macro-CPE may control the amount of active xDSL lines and it may switch the xDSL lines on and off. At least one xDSL line shall be kept active for allowing the user(s) to access the network without significant delay (e.g., without a training phase to be conducted by setting up at least one xDSL line).

OAM signaling messaging may be provided that allows the Macro-CPE to inform the CO (or a DSLAM within the CO) to activate and/or to deactivate a xDSL line. In case of deactivation, preferably the affected chipset inside the DSLAM as well as the affected chipset inside the Macro-CPE may enter a power-saving mode. Upon receiving a wake-up signal message, the sleeping xDSL line will be (re-)activated.

### List of Abbreviations:

- CO: Central Office
- CPE: Customer Premises Equipment
- DSL: Digital Subscriber Line
- DSLAM: Digital Subscriber Line Access Multiplexer
- MIMO: Multiple Input Multiple Output
- OAM: Operation and Maintenance

## Claims

1. A method for processing data at a network element connected via several digital subscriber line connections to a digital subscriber line access multiplexer, DSLAM, and via connections to several users,
**characterized in that**
by the network element, the digital subscriber line connections to the DSLAM are switched to active or inactive according to bandwidth and/or traffic requested by the users, whereby
at least one digital subscriber line connection is kept active.

2. The method according to claim 1, wherein said users are or are associated with customer premises equipments.

3. The method according to any of the preceding claims,
wherein the connections to the users comprise one of the following:
- an xDSL line;
- an Ethernet connection;
- a wireless connection;
- a fiber line.

4. The method according to any of the preceding claims,
wherein at least one digital subscriber line connection to the DSLAM is activated if the users require and/or request an increased bandwidth.

5. The method according to any of the preceding claims,
wherein at least one digital subscriber line connection to the DSLAM is deactivated if the users do not require the bandwidth provided for a predetermined amount of time.

6. The method according to any of the preceding claims,
wherein digital subscriber lines to the DSLAM are connected to linecards of the DSLAM.

7. The method according to any of the preceding claims,
wherein the digital subscriber line connections to the DSLAM are operated in a MIMO mode.

8. The method according to any of the preceding claims,
wherein a message is conveyed to the network to activate and/or deactivate at last one digital subscriber line connection to the DSLAM.

9. The method according to claim 8, wherein said message is a OAM signaling message.

10. A network element
- comprising a first interface comprising several digital subscriber line connections towards a digital subscriber line access multiplexer, DSLAM;
- comprising a second interface comprising connections
to several users;
**characterized in that**
- said network element switches the digital subscriber line connections to the DSLAM to active or inactive according to bandwidth and/or traffic requested by the users and
- at least one digital subscriber line connection is kept active.

11. Communication system comprising the network element according to claim 10.

## Patentansprüche

1. Verfahren zum Verarbeiten von Daten in einem Netzwerkelement, das über mehrere digitale Teilnehmeranschlussverbindungen mit einem digitalen Teilnehmeranschluss-Zugangsmultiplexer DSLAM und über Verbindungen mit mehreren Benutzern verbunden ist,
**dadurch gekennzeichnet, dass**
durch das Netzwerkelement die digitalen Teilnehmeranschlussverbindungen mit dem DSLAM gemäß Bandbreite und/oder Verkehr, die durch die Benutzer angefordert werden, auf aktiv oder inaktiv geschaltet werden, wobei
mindestens eine digitale Teilnehmeranschlussverbindung aktiv gehalten wird.

2. Verfahren nach Anspruch 1, wobei die Benutzer Kundenstandortgeräte sind oder diesen zugeordnet sind.

3. Verfahren nach einem der vorhergehenden Ansprüche, wobei die Verbindungen mit den Benutzern eine der Folgenden umfassend:
- einen xDSL-Anschluss;
- eine Ethernet-Verbindung;
- eine drahtlose Verbindung;
- einen Faseranschluss.

4. Verfahren nach einem der vorhergehenden Ansprüche, wobei mindestens eine digitale Teilnehmeranschlussverbindung mit dem DSLAM aktiviert wird, wenn die Benutzer eine erhöhte Bandbreite erfordern und/oder anfordern.

5. Verfahren nach einem der vorhergehenden Ansprüche, wobei mindestens eine digitale Teilnehmeranschlussverbindung mit dem DSLAM deaktiviert wird, wenn die Benutzer die bereitgestellte Bandbreite für einen vorbestimmten Zeitraum nicht erfordern.

6. Verfahren nach einem der vorhergehenden Ansprüche, wobei digitale Teilnehmeranschlüsse an den DSLAM mit Leitungsanschlusskarten des DSLAM verbunden sind.

7. Verfahren nach einem der vorhergehenden Ansprüche, wobei die digitalen Teilnehmeranschlussverbindungen mit dem DSLAM in einem MIMO-Modus betrieben werden.

8. Verfahren nach einem der vorhergehenden Ansprüche, wobei eine Nachricht zum Netzwerk übermittelt wird, um mindestens eine digitale Teilnehmeranschlussverbindung mit dem DSLAM zu aktivieren und/oder zu deaktivieren.

9. Verfahren nach Anspruch 8, wobei die Nachricht eine OAM-Signalisierungsnachricht ist.

10. Netzwerkelement
- mit einer ersten Schnittstelle, die mehrere digitale Teilnehmeranschlussverbindungen in Richtung eines digitalen Teilnehmeranschluss-Zugangsmultiplexers DSLAM umfasst;
- mit einer zweiten Schnittstelle, die Verbindungen mit
mehreren Benutzern umfasst;
**dadurch gekennzeichnet, dass**
- das Netzwerkelement die digitalen Teilnehmeranschlussverbindungen mit dem DSLAM gemäß Bandbreite und/oder Verkehr, die durch die Benutzer angefordert werden, auf aktiv oder inaktiv schaltet und
- mindestens eine digitale Teilnehmeranschlussverbindung aktiv gehalten wird.

11. Kommunikationssystem, das das Netzwerkelement nach Anspruch 10 umfasst.

## Revendications

1. Un procédé de traitement de données au niveau d'un élément de réseau raccordé par l'intermédiaire de plusieurs connexions de ligne d'abonné numérique à un multiplexeur d'accès de ligne d'abonné numérique, DSLAM, et par l'intermédiaire de connexions à plusieurs utilisateurs, **caractérisé en ce que**
par l'élément de réseau, les connexions de ligne d'abonné numérique au DSLAM sont commutées vers un mode actif ou inactif selon la bande passante et/ou le trafic demandés par les utilisateurs, grâce à quoi
au moins une connexion de ligne d'abonné numérique est maintenue active.

2. Le procédé selon la revendication 1, dans lequel lesdits utilisateurs sont, ou sont associés à, des équipements de locaux d'abonné.

3. Le procédé selon l'une quelconque des revendications précédentes, dans lequel les connexions aux utilisateurs comprennent un élément parmi :
- une ligne xDSL,
- une connexion Ethernet,
- une connexion sans fil,
- une ligne de fibres.

4. Le procédé selon l'une quelconque des revendications précédentes, dans lequel au moins une connexion de ligne d'abonné numérique au DSLAM est activée si les utilisateurs exigent et/ou demandent une bande passante accrue.

5. Le procédé selon l'une quelconque des revendications précédentes, dans lequel au moins une connexion de ligne d'abonné numérique au DSLAM est désactivée si les utilisateurs n'exigent pas la bande passante fournie pendant une période de temps prédéterminée.

6. Le procédé selon l'une quelconque des revendications précédentes, dans lequel des lignes d'abonnés numériques au DSLAM sont raccordées à des cartes de ligne du DSLAM.

7. Le procédé selon l'une quelconque des revendications précédentes, dans lequel les connexions de ligne d'abonné numérique au DSLAM sont exploitées dans un mode MIMO.

8. Le procédé selon l'une quelconque des revendications précédentes, dans lequel un message est acheminé au réseau de façon à activer et/ou désactiver au moins une connexion de ligne d'abonné numérique au DSLAM.

9. Le procédé selon la revendication 8, dans lequel ledit message est un message de signalisation OAM.

10. Un élément de réseau
- comprenant une première interface comprenant plusieurs connexions de ligne d'abonné numérique vers un multiplexeur d'accès de ligne d'abonné numérique, DSLAM,
- comprenant une deuxième interface comprenant des connexions à plusieurs utilisateurs,
**caractérisé en ce que**
- ledit élément de réseau commute les connexions de ligne d'abonné numérique au DSLAM vers un mode actif ou inactif selon la bande passante et/ou le trafic demandés par les utilisateurs et
- au moins une connexion de ligne d'abonné numérique est maintenue active.

11. Un système de communication comprenant l'élément de réseau selon la revendication 10.
